# EUROPÄISCHE PATENTSCHRIFT

(11) **EP 1 399 292 B1**
(45) Veröffentlichungstag und Bekanntmachung des Hinweises auf die Patenterteilung: **09.02.2005**
(21) Anmeldenummer: 02760190.5
(22) Anmeldetag: 20.06.2002
(51) Int. Cl.: B23Q 17/24, B23Q 17/22, B23P 11/02, B23P 19/00

(54) **VERFAHREN UND VORRICHTUNG ZUM BEFESTIGEN VON WERKZEUGEN IN WERKZEUGFUTTERN**
METHOD AND DEVICE FOR FIXING TOOLS IN CLAMPING CHUCKS
PROCEDE ET DISPOSITIF PERMETTANT DE FIXER DES OUTILS A DES MANDRINS DE SERRAGE

(30) Priorität: 26.06.2001 DE 10131352
(43) Veröffentlichungstag der Anmeldung: 24.03.2004
(73) Patentinhaber: E. Zoller Gmbh & Co. KG Einstell-und Messgeräte, 71691 Freiberg/Neckar (DE)
(72) Erfinder: PFAU, Christian, 74321 Bietigheim-Bissingen (DE)
(74) Vertreter: Daub, Nicole
(86) Internationale Anmeldenummer: PCT/EP2002/006819
(87) Internationale Veröffentlichungsnummer: WO 2003/002298

(56) Entgegenhaltungen:
- EP-A- 0 247 939
- EP-A- 0 538 642
- EP-A- 0 830 917
- EP-A- 1 002 605
- EP-A- 1 103 338
- EP-A- 1 155 765
- WO-A-02/18093
- GB-A- 2 198 374
- US-A- 3 241 451
- US-A- 5 582 494
- PATENT ABSTRACTS OF JAPAN vol. 014, no. 127 (M-0947), 9. März 1990 (1990-03-09) -& JP 01 321151 A (TOYO SEIKI KK), 27. Dezember 1989 (1989-12-27)

## Beschreibung

Die vorliegende Erfindung betrifft ein Verfahren und eine Vorrichtung zum Befestigen von Werkzeugen in Werkzeugfuttern nach den Oberbegriffen der Patentansprüche 1 bzw. 8, wie sie z.B. aus der EP-A-1 103 338 bekannt sind.

Es sind Verfahren zum kraftschlüssigen Spannen von Schaftwerkzeugen, insbesondere Zerspanungswerkzeugen, in entsprechenden Futtern zur Aufnahme in CNC-Bearbeitungsmaschinen bekannt. Bei einem dieser bekannten Verfahren wird beispielsweise eine zylindrische Aufnahmebohrung an der Werkzeugaufnahme des Futters mit heißer Luft oder über Induktionsströme erwärmt, so daß sich diese Aufnahmebohrung ausdehnt. Die Vergrößerung der Aufnahmebohrung durch die Erwärmung ermöglicht dann ein Einführen des eigentlichen Zerspanungswerkzeuges, so daß unmittelbar nach der Abkühlung der Werkzeugaufnahme ein kraftschlüssiger Verbund zwischen Schaft und Werkzeugaufnahme zur Verfügung gestellt ist. Die einfache Ausführung der Werkzeugaufnahmen, die hohe Rundlaufgenauigkeit, die geringe Unwucht und die hohe Kraftübertragung erweisen sich insbesondere im Rahmen einer Hochgeschwindigkeitsbearbeitung, welche heute in der spanabhebenden Fertigung immer mehr an Bedeutung gewinnt, als sehr vorteilhaft.

Ebenfalls bekannt sind Hydrodrehnspannfutter, welche mittels eines internen Hydraulikzylinders derart druckbeaufschlagbar sind, daß ihre innere Anlagefläche in einer Werkzeugaufnahme gegen einen eingeführten Werkzeugschaft drückt.

Zur Durchführung derartiger Verfahren sind verschiedene Schrumpfgeräte bekannt. Sämtliche bekannten Schrumpfgeräte erfordern eine manuelle Handhabung. Bei derartigen Vorrichtungen werden die Werkzeuge lediglich ein- oder ausgeschrumpft, das eigentliche Vermessen zur Ermittlung von Werkzeugabmessungen, z.B. als Korrekturwert für eine CNC-Maschine, oder das Einstellen auf ein bestimmtes Sollmaß, erfolgt dann anschließend in einem separaten Arbeitsgang auf herkömmlichen Einstell- und Meßgeräten.

Insbesondere bei mehrspindligen Maschinen wird jedoch beispielsweise gefordert, daß mehrere Werkzeuge gleichen Typs auf die gleiche Werkzeuglänge einstellbar sind. In einem derartigen Fall müssen im erwärmten, offenen Zustand der Schrumpffutter die jeweiligen Zerspanungswerkzeuge in eine bestimmte Längenposition bezüglich des Schrumpffutters gebracht werden. Dies erfordert in der Regel eine sehr schnelle Vorgehensweise, da die Zeit zum Einstellen des Werkzeuges während eines Schrumpfvorgangs typischerweise nur etwa 2 bis 10 Sekunden beträgt. Zur Einstellung gewünschter Werkzeugmaße ist es in diesem Zusammenhang bekannt, Adapterstücke oder Längsanschläge zu verwenden, wodurch jedoch Einstellgenauigkeiten lediglich im Zehntelmillimeterbereich erzielbar sind.

Derartige Verfahren bergen ferner aufgrund der manuellen Handhabung die Gefahr von Verletzungen oder Verbrennungen für den Bediener in sich. Die Durchführung der Verfahren ist umständlich und in hohem Maße von der Geschicklichkeit. des jeweiligen Bedieners abhängig.

Es sind in den letzten Jahren Lösungen vorgestellt worden, bei denen auf einem Einstell- und Meßgerät über einen positionierbaren Anschlag die Ist-Position des Werkzeugschaftes bei eingestellter Sollänge ermittelt wurde. Ein parallel angesteuerter Anschlag im Schrumpfgerät wird hierbei auf die Soll-Position derart vorpositioniert, daß sich das Werkzeug beim Einschrumpfen auf den voreingestellten Anschlag auflegt. Diese Vorgehensweise bedarf zweier unterschiedlicher Vorrichtungen, welche beide die Anwesenheit und Bedienung durch eine Bedienperson erfordern. Auch die mit dem taktilen Anschlag erzielbare Genauigkeit erweist sich für viele Anwendungen als nicht ausreichend. Aufgrund des manuellen Einsetzens bzw. Eindrückens des Werkzeuges bei einem Schrumpfvorgang besteht auch hier wieder die Gefahr von Verbrennungen für den Bediener. Auch Schnittwunden durch die notwendige Berührung der Werkzeugschneiden sind nicht auszuschließen.

Aufgabe der Erfindung ist insbesondere ein möglichst einfaches und zeitsparendes Befestigen von Werkzeugen in einem Werkzeugfutter.

Diese Aufgabe wird gelöst durch ein Verfahren mit den Merkmalen des Patentanspruchs 1 sowie durch eine Vorrichtung mit den Merkmalen des Patentanspruchs 8.

Mit einem Verfahren gemäß dem Patentanspruch 1 und mit einer Vorrichtung gemäß dem Patentanspruch 8 kann ein Werkzeug in einem Werkzeugfutter schnell und exakt, insbesondere vorteilhaft ohne Anschlag, fixiert werden.

Durch die erfindungsgemäß erzielbare Automatisierung ist gegenüber herkömmlichen Verfahren die Gefahr für eine Bedienperson weitgehend ausgeschlossen, und zwar insbesondere bei Schrumpfverfahren, wobei die erfindungsgemäße Lösung jedoch bei sämtlichen, dem Fachmann als sinnvoll erscheinenden Verfahren und Vorrichtungen anwendbar ist, wie beispielsweise bei Verfahren und Vorrichtungen mit Spannschrauben, hydraulischen Spannmechanismen usw.

Das erfindungsgemäße Verfahren kann vollautomatisch und daher bedienerunabhängig ausgeführt werden. Erfindungsgemäß können Zerspanungswerkzeuge ohne Verletzungsgefahr in kürzester Zeit und mit höchster Genauigkeit eingeschrumpft werden. Das Einwechseln, Befestigen, insbesondere Einschrumpfen, Messen, Einstellen, Auswechseln und/oder Kühlen von Werkzeugen kann in einem geschlossenen Ablauf erfolgen, ohne daß ein Bediener eingreifen muß.

Dadurch, daß erfindungsgemäß eine herkömmliche, vollautomatische Einstell- und Meßeinrichtung mit Bildverarbeitung verwendet werden kann, ist der finanzielle Aufwand zur Durchführung des erfindungsgemäßen Verfahrens im Vergleich zu seinem Nutzen äußerst gering.

Aufgrund der Möglichkeit der durchgängigen Automatisierung des Schrumpf- sowie Einstell- und Meßvorgangs können auch sämtliche schrumpfrelevanten Daten, wie zum Beispiel Induktionszeit, Meßwertkorrektur, Kühlzeit usw. in einer Datenbank des Einstell- und Meßgerätes für einen jeweiligen Werkzeugtyp bzw. eine jeweilige Werkzeugidentifikationsnummer gespeichert und vom System automatisch berücksichtigt werden.

Mit der erfindungsgemäßen Lösung können vor und/oder während der Einführung des Werkzeugs sämtliche, dem Fachmann als sinnvoll erscheinende Meßverfahren durchgeführt werden, beispielsweise kann eine Schneidenzahl bestimmt, einzelne Werkzeugschneiden können vermessen, eine größte Werkzeugschneide kann ermittelt und/oder eine Hüllkurve des Werkzeugs kann bestimmt werden usw.

Erfindungsgemäß ist gegenüber herkömmlichen Verfahren eine Verkürzung der Ein- und Ausschrumpfzeiten erzielbar, so daß ein optimales Zeit- und Energieverhältnis realisierbar ist. Bei der Durchführung des erfindungsgemäßen Verfahrens entsteht gegenüber herkömmlichen Verfahren weniger Wärme, wodurch das System und der Werkzeughalter insgesamt geschont werden.

Vorteilhafte Ausgestaltungen des erfindungsgemäßen Verfahrens bzw. der erfindungsgemäßen Vorrichtung sind Gegenstand der Unteransprüche.

Zweckmäßigerweise wird die Soll-Position der Werkzeugschneide bezüglich eines Referenzpunktes auf dem Werkzeugfutter definiert. Dieser Referenzpunkt kann für jeden Schrumpfvorgang mittels einer verwendeten Optik bestimmt werden. Bei zahlreichen Anwendungen kann jedoch davon ausgegangen werden, daß der Referenzpunkt bei Einführung des Werkzeugfutters in eine Werkzeugaufnahmespindel stets positionsgenau angeordnet sein wird, so daß keine konkrete Vermessung dieses Punktes notwendig ist.

Es ist bevorzugt, daß die Ist-Position und/oder die Sollposition und/oder der Referenzpunkt berührungslos, insbesondere mittels einer eine Optik aufweisenden Meßvorrichtung, ermittelt bzw. überprüft wird. Mit dieser Maßnahme sind in einfacher und effektiver Weise genaue Messungen durchführbar. Beschädigungen durch Kontakte zwischen dem Werkzeug und einer Meßvorrichtung können sicher vermieden werden.

Gemäß einer bevorzugten Ausführungsform des erfindungsgemäßen Verfahrens wird das Werkzeugfutter bei der Einführung des Werkzeuges in das Werkzeugfutter um eine Drehachse gedreht. Diese Maßnahme erlaubt eine positionsgenaue und im Wesentlichen selbstzentrierende Einführung des Werkzeuges in das Werkzeugfutter.

Erfindungsgemäß ist es ferner möglich, anschließend an das Einschrumpfen des Werkzeuges ein Ausschrumpfen des Werkzeuges aus dem Werkzeugfutter durchzuführen.

Zweckmäßigerweise ist eine bezüglich der Drehung des Werkzeugfutters und des Werkzeuges drehfeste Einstell- und Meßvorrichtung zur Durchführung der Vermessung des Werkzeuges vorgesehen. Mit dieser Maßnahme ist eine vollständige Vermessung des Werkzeuges vor und/oder insbesondere während der Befestigung bzw. des Einschrumpfens in einfacher Weise möglich. Befestigungs- bzw. Einschrumpf- und Vermessungsvorgänge sind hier in besonders einfacher Weise gleichzeitig durchführbar.

Bevorzugte Ausführungsbeispiele der Erfindung werden nun anhand der beigefügten Zeichnung näher erläutert. In dieser zeigt
- Figur 1: in schematischer seitlicher, teilweise geschnittener Ansicht den Aufbau einer bevorzugten Ausführungsform der erfindungsgemäßen Vorrichtung,
- Figur 2: in seitlicher Ansicht ein erfindungsgemäß einzuschrumpfendes Schaftwerkzeug,
- Figur 3: in seitlicher Ansicht ein erfindungsgemäß verwendbares Schrumpffutter,
- Figur 4: in seitlicher Schnittansicht ein aus einem Schrumpffutter und einem eingeschrumpften Schaftwerkzeug gebildetes Komplettwerkzeug,
- Figur 5: in teilweise geschnittener seitlicher Ansicht eine im Rahmen der erfindungsgemäßen Vorrichtung einsetzbare Be- und Entladestation und
- Figur 6: in Draufsicht eine im Rahmen der erfindungsgemäßen Vorrichtung einsetzbare Greifer- und Dreheinheit für ein einzuschrumpfendes Schaftwerkzeug.

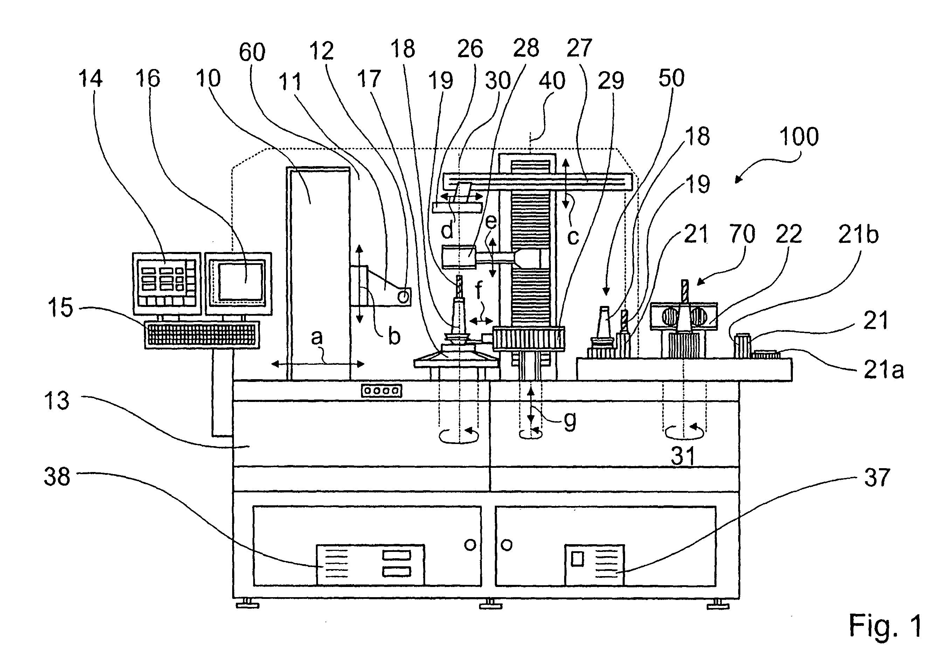

Eine bevorzugte Ausführungsform der erfindungsgemäßen Vorrichtung ist in Figur 1 insgesamt mit 100 bezeichnet.

Eine Einstell- und Meßeinrichtung weist einen in Richtung des Doppelpfeiles a verfahrbaren Schlitten 10 auf, auf dem ein Optikträger 11 in Richtung des Doppelpfeiles b verfahrbar ist. Der Optikträger 11 trägt eine Kamera bzw. eine Meßoptik 12, welche vorzugsweise im Durchlichtverfahren arbeitet.

Der Schlitten 10 ist auf einem Grundkörper 13 verfahrbar, welcher weitere Elemente der erfindungsgemäßen Vorrichtung trägt, wie weiter unten erläutert wird.

Die die Komponenten 10, 11 und 12 aufweisende Meßeinheit wird mittels einer Bedieneinheit 14 bedient. Die Bedieneinheit 14 weist vorzugsweise einen als PC ausgeführten Rechner 38 mit Mitteln zur Meßbild-Bildverarbeitung auf. Steuerbefehle oder Einstellungen sind vorzugsweise mittels einer Tastatur 15 eingebbar. Ein zu vermessendes Werkzeug ist vorzugsweise auf einem Monitor 16 darstellbar.

Eine um eine Drehachse 30 drehbare, CNC-gesteuerte Werkzeugaufnahmespindel ist mit 17 bezeichnet. Diese Werkzeugaufnahmespindel dient zur Aufnahme eines Schrumpffutters 18, in welches ein einzuschrumpfendes Werkzeug 19 einbringbar ist.

Rechts in der Figur erkennt man ein als Revolver ausgeführtes Be- und Entlademagazin, insgesamt mit 20 bezeichnet, welches um eine Drehachse 31 drehbar ausgeführt ist. Das Magazin 20 trägt eine Anzahl von Be- und Entladestationen 21, welche zur Aufnahme jeweils eines Schrumpffutters 18 in einem Bereich 21a und eines einzuschrumpfenden Schaftwerkzeuges in einem Bereich 21b ausgebildet sind. Die Be- und Entladestation ist ferner mit einer Kühleinheit 22 ausgebildet, in welche das aus dem Schrumpffutter und dem Schaftwerkzeug gebildete Komplettwerkzeug nach dem Einschrumpfen einbringbar ist.

Die Vorrichtung weist ferner eine CNC-gesteuerte und/oder pneumatisch angetriebene Einheit 25 mit einem Vertikalschlitten 25' auf. Dieser Vertikalschlitten 25' trägt eine Werkzeugspanneinrichtung 26 auf einem Querschlitten 27 und eine Induktionsspule 28. Der Querschlitten 27 ist in Richtung des Doppelpfeiles c verschiebbar, die darauf angebrachte Werkzeugspanneinrichtung 26 in Richtung des Doppelpfeiles d. Die Werkzeugspanneinrichtung 26 ist ferner im die Achse 30 drehbar ausgebildet.

Die Induktionseinheit bzw. -spule 28 ist in Richtung des Doppelpfeiles e entlang der Achse 30 verschiebbar. Es ist denkbar, die Induktionseinheit 28 zusätzlich in Richtung des Doppelpfeiles f und/oder drehbar um die Achse 40 auszubilden.

Die Einheit 25 weist ferner einen Werkzeugwechsler 29 zur Übertragung von Schrumpffuttern von dem Magazin 20 auf die Werkzeugaufnahmespindel 17 und umgekehrt auf. Der Werkzeugwechsler ist um die Achse 40 drehbar und in Richtung des Doppelpfeiles g parallel zu der Achse 40 verfahrbar.

Die Kühleinheit 22 und die Induktionsspule 28 sind mittels eines Generators 37, welcher in dem Grundkörper untergebracht ist, beaufschlagbar. In dem Grundkörper ist der Rechner 38 untergebracht, welcher zusätzlich zur oben erwähnten Bildverarbeitung zur CNC-Motorsteuerung z.B. für die oben erwähnten Komponenten 20, 25, 27, 29, 17, 28, 26 dient.

Die Vorrichtung kann mit einer gestrichelt dargestellten Komplettverkleidung 60 ausgebildet sein.

Die Durchführung einer bevorzugten Ausführungsform des erfindungsgemäßen Verfahrens wird nun unter Bezugnahme auf die oben erläuterte Vorrichtung gemäß Figur 1 näher beschrieben.

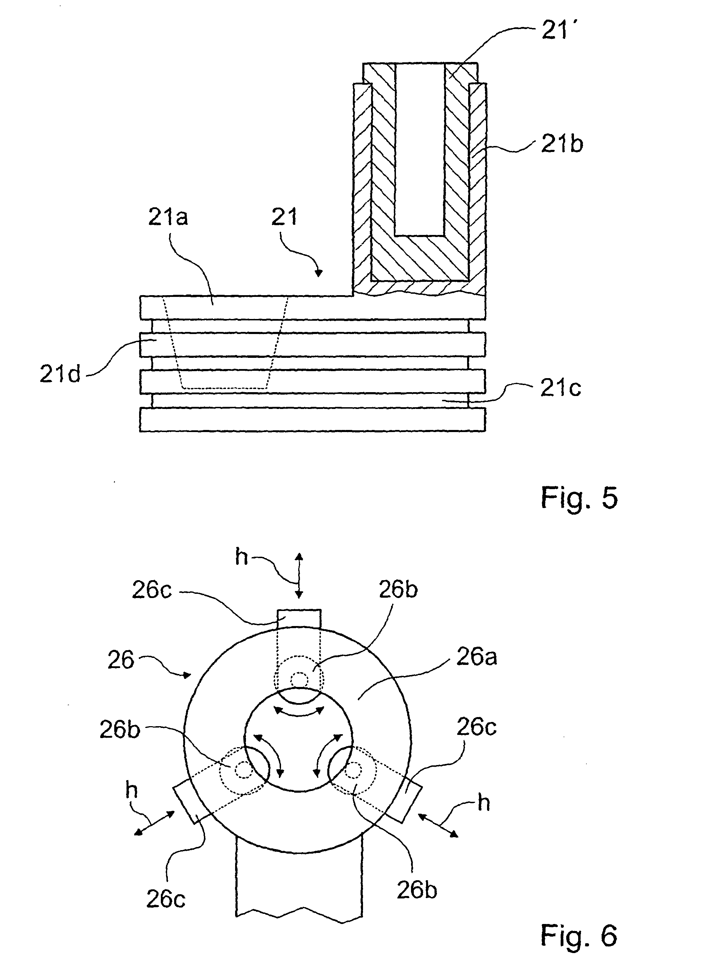

Zunächst wird ein Schaftwerkzeug 19 in eine Aufnahmehülse 21' gegeben, wonach diese beiden Teile in eine entsprechende Aufnahme 21b einer Be- und Entladestation 21 gegeben werden. Die Positionierung der Aufnahmehülse 21' in der Station 21 ist in Figur 5 besonders deutlich erkennbar.

Entsprechend wird ein Schrumpffutter 18 in eine entsprechende Aufnahme 21a der Station 21 eingesetzt. Die Aufnahme 21a ist ebenfalls in Figur 5 erkennbar.

Anschließend wird die Identifikationsnummer des Werkzeuges 19 mittels der Tastatur 15 in den Rechner 38 eingegeben. Alternativ hierzu können die relevanten, mittels der Identifikationsnummer zuordenbaren Daten des Werkzeuges, beispielsweise Sollmaße, Schrumpfzeit, Schaftdurchmesser etc., von dem Bediener manuell in das System eingegeben oder aus der Datenbank geladen werden.

Mit Starten des Schrumpfablaufes mittels entsprechender Steuerung des Rechners 38 wird das Magazin 20 automatisch um seine Mittelachse 40 gedreht, so daß das Schrumpffutter 18 und das Schaftwerkzeug 19 in eine Entnahmeposition (mit 50 bezeichnet) des Magazins 20 gelangen. Der Werkzeuggreifer bzw. -wechsler 29 fährt anschließend aus und entnimmt das Schrumpffutter 18 aus der in der Entnahmeposition befindlichen Be- und Entladestation 21 und setzt es mittels einer Drehung um die Achse 40 in die Werkzeugaufnahmespindel 17 ein. Eine in der Werkzeugaufnahmespindel 17 integrierte Werkzeugspanneinrichtung wird automatisch eingeschaltet und fixiert das Schrumpffutter 18 kraftbetätigt in der Werkzeugaufnahmespindel 17. , Anschließend fährt, gesteuert über den Rechner 38, die Induktionseinheit 28 über das in der Werkzeugaufnahmespindel 17 positionierte Schrumpffutter 18, d.h. in eine dem Schrumpffutter 18 zugeordnete Induktionshöhe. Hierbei ist, wie bereits erwähnt, die Induktionseinheit 28 in Richtung des Doppelpfeiles e verfahrbar.

Dann fährt die Greifereinheit 26 entlang des Querschlittens 27 und mittels einer entsprechenden Verschiebung des Schlittens 27 in Richtung des Doppelpfeiles c zum Schaftwerkzeug 19, welches, wie erwähnt, ebenfalls in der in der Entnahmeposition 50 befindlichen Be- und Entladestation 21 positioniert ist. Die Greifereinheit 26 greift dann das Schaftwerkzeug 19 und entnimmt es der Aufnahmehülse 21'.

Das Schaftwerkzeug 19 wird mittels der Greifereinheit 26 CNC-gesteuert in eine Warteposition über das eingespannte Schrumpffutter 18 verfahren. Somit sind sowohl Schrumpffutter 18 als auch Schaftwerkzeug 19 konzentrisch bezüglich der Achse 30 positioniert.

Anschließend verfahren der Meßschlitten 10 und der Optikträger 11 derart, daß die Optik 12 in den Bereich der Schneide 19a des zu messenden Schaftwerkzeuges 19 gelangt. Für den Fall, daß die Sollmaße der Schneide 19a nicht bekannt sind, ist zweckmäßigerweise vorgesehen, mittels des Meßgerätes (Optik 12 und zugeordneter Rechner 38) einen automatischen Suchlauf durchzuführen.

Sobald die Werkzeugschneide des Schaftwerkzeuges 19 im Blickfeld der Optik 12 vorliegt, beginnt die Greifer- und Dreheinheit 26 (CNC-gesteuert durch den Rechner 38) das Schaftwerkzeug 19 motorisch um die Drehachse 30 zu drehen, und zwar um die Werkzeugschneide scharfzustellen. Nachdem die Werkzeugschneide scharfgestellt ist, wird die tatsächliche Ist-Position der Werkzeugschneide entlang der Längsachse, d.h. insbesondere die Ist-Position der Schneidenspitze des Schaftwerkzeuges µ-genau ermittelt. Mit den somit zur Verfügung gestellten Längsmaßen des Schaftwerkzeuges bzw. der Ist-Positionierung der Schneidenspitze ist der Verfahrweg entlang der Achse 30 für die Wechseleinheit 26 zum Erreichen des für das Schaftwerkzeug wesentlichen Sollmaßes, insbesondere bezüglich des Schrumpffutters 18 oder der Werkzeugaufnahmespindel 17, bekannt.

Nun wird die Induktionsspule 28 rechnergesteuert eingeschaltet, wodurch das Schrumpffutter 18 erwärmt wird und sich ausdehnt.

Die Werkzeugaufnahmespindel 17 beginnt im Anschluß hieran, motorisch angetrieben, um die Achse 30 zu drehen. Gleichzeitig werden die Greifer- und Dreheinheit bzw. Wechseleinheit 26 mit dem darin gehalterten Schaftwerkzeug 19 und der Querschlitten 27 derart CNC-gesteuert verfahren, daß der Schaft 19b des Schaftwerkzeuges 19 in das Schrumpffutter 18 eingeführt wird. Während dieses Einfahrens wird die Schneide 19a des Schaftwerkzeuges 19 mittels der Optik 12 (gegebenenfalls durch entsprechende Verschiebungen der Meßschlitten 10 oder 11) permanent verfolgt und vermessen. Bei Erkennen von Änderungen in der Positionierung (beispielsweise aufgrund einer unbeabsichtigten Verschiebung des Werkzeuges innerhalb der Wechseleinheit) werden diese automatisch an die Schlitten 25 oder 27 bzw. den Rechner 38 zur Korrekturverrechnung weitergegeben.

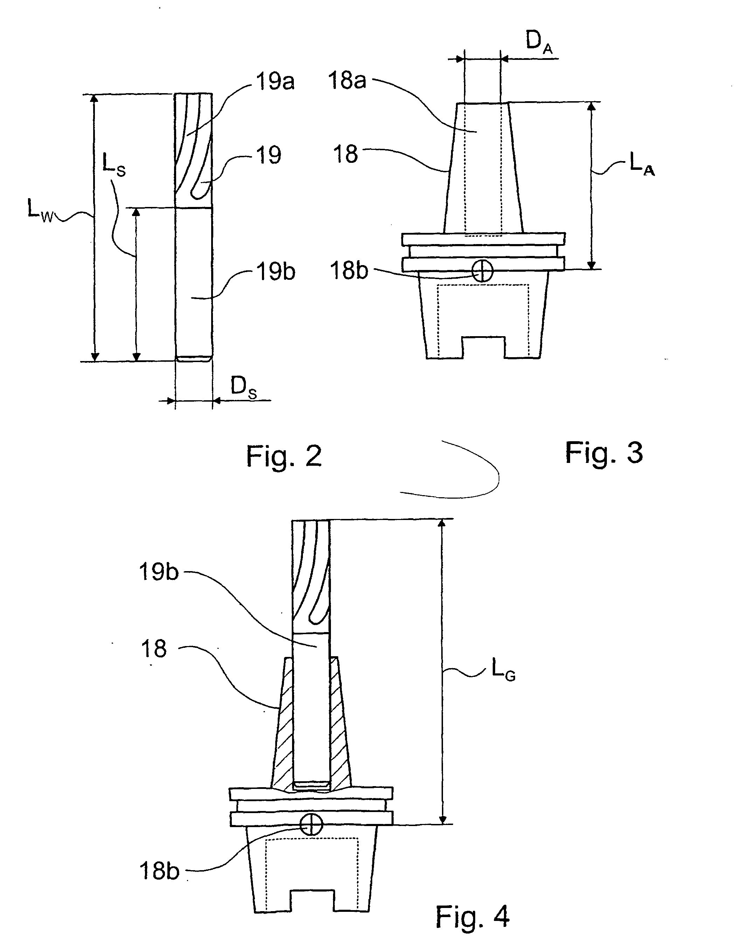

Ist das aufgrund der Längsvermessung des Schaftwerkzeuges 19 bestimmbare Sollmaß (in Figur 4 mit L_{G} bezeichnet) erreicht, wird die Wechsel- bzw. Greifereinheit 26, welche das Schaftwerkzeug 19 hält, in ihrer aktuellen Position angehalten. Ferner wird der der Induktionsspule 28 zugeführte Strom abgeschaltet, wodurch das Schrumpffutter unter Festlegung des Schaftwerkzeuges 19 in seiner aktuellen Position abkühlt.

Nach entsprechender Abkühlung des Schrumpffutters 18 oder Erwärmung des Schafts 19b, beispielsweise nach wenigen Sekunden, gibt die Greifereinheit 26 das Werkzeug 19 frei. Sie wird anschließend mittels einer senkrechten Bewegung entlang der Achse 30 des Querschlittens 27 nach oben verfahren, beispielsweise in eine Warteposition. Die Induktionseinheit 28 wird im Anschluß hieran ebenfalls entlang der Achse 30 nach oben in eine Warteposition verfahren.

Nun wird die Drehung der Werkzeugaufnahmespindel 17 um die Achse 30 beendet, und die Werkzeugspannung, mit welcher das Schrumpffutter 18 in der Werkzeugspindel fixiert ist, gelöst.

Der Werkzeugwechsler 29 entnimmt nun das aus Schrumpffutter 18 und Schaftwerkzeug 19 bestehende eingeschrumpfte Komplettwerkzeug und setzt dieses in eine bereitstehende Be- und Entladestation des Magazins 20. Durch Drehung oder eine andere geeignete Bewegung wird dann das geschrumpfte Komplettwerkzeug vor oder in der Kühlstation 70 positioniert. Nach ausreichender Kühlung und Signalisierung bzw. Überprüfung, beispielsweise durch einen (nicht dargestellten) Infrarot-Induktor, wird das Werkzeug anhand einer optischen Kontrolle für die Entnahme durch einen Bediener freigegeben. Hierdurch ist gewährleistet, daß ein das Komplettwerkzeug entnehmender Bediener nicht der Gefahr von Verbrennungen ausgesetzt ist.

Der dargestellte Ablauf läßt sich in analoger Weise für sämtliche auf dem Magazin 20 vorgesehenen Be- und Entladestationen 21, welche mit entsprechenden Schrumpffuttern 18 und Schaftwerkzeugen 19 bestückt sind, wiederholen.

Mit der dargestellten Vorrichtung läßt sich durch Abarbeitung der oben dargestellten Schritte in umgekehrter Reihenfolge auch in einfacher Weise ein Ausschrumpfvorgang durchführen. Bei einem Ausschrumpfvorgang wird zweckmäßigerweise auf die Verfahrensschritte im Zusammenhang mit dem Vermessen des Werkzeuges verzichtet.

Wesentlich bei dem dargestellten Verfahren zum Einschrumpfen ist, daß bereits vor der Einführung des Schaftwerkzeuges 19 in das Schrumpffutter 18 die exakte Positionierung der Spitze des Schaftwerkzeuges 19 in Richtung seiner Längsachse, d.h. auf der Achse 30, festgestellt wird. Mit dieser Information ist ein Herunterfahren des Schaftwerkzeuges 19 in die Soll-Position innerhalb des Schrumpffutters 18 in einfacher Weise möglich, ohne daß zusätzliche Einstell- und Justiermechanismen und insbesondere Anschläge in dem Schrumpffutter 18 vorgesehen sein müssen. Erfindungsgemäß wird lediglich das einzuschrumpfende Schaftwerkzeug 19 in die korrekte Höhe innerhalb des erwärmten Schrumpffutters 18 eingeführt, wonach das Schrumpffutter 18 zur Fixierung des Schaftwerkzeuges 19 in dieser Position abgekühlt wird. Bei herkömmlichen Verfahren war es notwendig, das Schaftwerkzeug 19 bis zu einem Anschlag innerhalb des Schrumpffutters 18 abzusenken, und dann mittels mechanischer Verschiebung dieses Anschlags die gewünschte Soll-Position des Schaftwerkzeuges 19 einzustellen. Hierzu war es notwendig, das Schrumpffutter 18 wesentlich länger als bei dem vorliegenden Verfahren erwärmt zu halten.

Wesentliche Komponenten der anhand der Figur 1 dargestellten Vorrichtung sind in den Figuren 2 bis 4 in größerem Detail dargestellt.

In Figur 2 erkennt man ein Schaftwerkzeug 19. Das Schaftwerkzeug 19, welches in ein Schrumpffutter 18, wie es in Figur 3 dargestellt ist, einzusetzen ist, weist eine Gesamtlänge L_{W} und eine Schaftlänge L_{S} auf. Der maximale Durchmesser (Hüllkurve) des Schaftwerkzeuges 19 ist mit D_{S} bezeichnet.

Das in Figur 3 dargestellte Schrumpffutter 18 weist eine Einsatzbohrung 18a mit einem Durchmesser D_{A} auf. Die Einsatzbohrung 18a ist gemäß Auslegung der verwendeten Bearbeitungsmaschine mit einem Steilkegel- oder einem Hohlkegelschaft ausgebildet. Die vertikale Länge des Schrumpffutters 18 von einem Referenzpunkt 18b aus ist mit L_{A} bezeichnet. Zweckmäßigerweise erfolgt die Einstellung der Soll-Position des in das Schrumpffutter 18 eingeführten Schaftwerkzeuges 19 relativ zu diesem Referenzpunkt 18b. Zu diesem Zwecke kann es sinnvoll sein, auch die Position des Referenzpunktes 18b mittels der Optik 12 zu erfassen. Dieser Sachverhalt ist in Figur 4 dargestellt, in der ein aus dem Schrumpffutter 18 und dem Schaftwerkzeug 19 gebildetes geschrumpftes Komplettwerkzeug dargestellt ist. Man erkennt, daß die Sollänge L_{G} dieses Komplettwerkzeuges relativ zu dem Punkt 18b definiert ist. Der Punkt 18b entspricht zweckmäßigerweise der Planlage des Schrumpffutters 18 in der Werkzeugaufnahmespindel 17. So ist es beispielsweise ebenfalls möglich, die genaue Position des Punktes 18b als bekannt vorauszusetzen, so daß eine optische Erfassung mittels der Optik 12 nicht notwendig ist.

In Figur 5 ist, wie bereits erwähnt, eine Be- und Entladestation 21, wie sie in dem Magazin 20 vorgesehen ist, dargestellt. Es ist beispielsweise möglich, das Magazin 20 mit 8 oder 16 derartiger Stationen zu bestücken. Die Be- und Entladestation 21 weist einen Metallkörper 21c zur Aufnahme eines einzelnen Schrumpffutters 18 in einer Aufnahme 21a auf. Dieser Metallkörper 21c ist zweckmäßigerweise mit Kühlrippen 21d zur Wärmeabführung ausgebildet. Der Metallkörper 21c ist auf seiner Oberseite mit einer Aufnahme 21b ausgebildet, in welche eine Einsteckhülse 21' zur Vorpositionierung einzelner Schaftwerkzeuge 19 zur Entnahme durch die Greifer- und Dreheinheit 26 (siehe Figur 1) einsteckbar ist.

In Figur 6 ist schließlich eine Greifer- und Dreheinheit 26 für die Schaftwerkzeuge 19 dargestellt. Die Einheit 26 weist ein Gehäuse 26a, Antriebsrollen bzw. Rollen 26b zum Halten und Drehen des Schaftwerkzeuges 19 und Spannschlitten 26c zur Aufnahme unterschiedlicher Schaftdurchmesser auf.

Durch entsprechende Verschiebung der Rollen 26b nach innen in Richtung der Pfeile h sind Werkzeuge mit beliebigen Schaftdurchmessern in sicherer Weise fixierbar. Zweckmäßigerweise ist nur eine der Rollen 26b als Antriebsrolle ausgebildet, um eine Drehung des eingespannten Schaftwerkzeuges 19 während des Einführens in das Schrumpffutter 18 bei kontinuierlicher Vermessung zu ermöglichen.

## Patentansprüche

1. Verfahren zur Befestigung eines Werkzeuges (19), insbesondere eines Schaftwerkzeuges (19), in einem Werkzeugfutter (18), bei dem das Werkzeug (19) in das Werkzeugfutter (18) eingeführt und im Werkzeugfutter (18) fixiert wird,
**dadurch gekennzeichnet,**
**daß** vor und/oder während der Einführung des Werkzeuges (19) in das Werkzeugfutter (18) die Ist-Position des Werkzeuges (19), insbesondere in Richtung Längsachse des Werkzeuges (19) bzw. in Einführrichtung, ermittelt wird und auf Grundlage der ermittelten Ist-Position die Einführung des Werkzeuges (19) in das Werkzeugfutter (18) bis zum Erreichen einer Soll-Position durchgeführt wird.

2. Verfahren nach Anspruch 1, **dadurch gekennzeichnet, daß** das Werkzeugfutter (18) zur Aufnahme des Werkzeuges (19) erwärmt wird und zur Fixierung des Werkzeuges (19) das Werkzeugfutter (18) nach Erreichen der Soll-Position des Werkzeuges (19) abgekühlt wird.

3. Verfahren nach Anspruch 1 oder 2, **dadurch gekennzeichnet, daß** die Ist-Position einer Werkzeugschneide (19a), insbesondere eine Werkzeugspitze, des Werkzeuges (19) ermittelt wird.

4. Verfahren nach einem der vorhergehenden Ansprüche, **dadurch gekennzeichnet, daß** die Soll-Position bezüglich eines Referenzpunktes (18b) auf dem Werkzeugfutter (18) definiert wird.

5. Verfahren zumindest nach einem der vorhergehenden Ansprüche, **dadurch gekennzeichnet, daß** die Ist-Position und/oder die Soll-Position und/oder der Referenzpunkt (18b) berührungslos, insbesondere mittels einer eine Optik (12) aufweisenden Meßvorrichtung (14, 15, 16, 10, 11, 12, 38), ermittelt und/oder überprüft wird.

6. Verfahren nach einem der vorhergehenden Ansprüche, **dadurch gekennzeichnet, daß** das Werkzeug (19) und/oder das Werkzeugfutter (18) während der Einführung des Werkzeuges (19) in das Werkzeugfutter (18) um eine, insbesondere eine gemeinsame Drehachse (30), gedreht werden.

7. Verfahren zumindest nach Anspruch 2, **gekennzeichnet durch** ein anschließendes Ausschrumpfen des Werkzeuges (19) aus dem Werkzeugfutter (18).

8. Vorrichtung zur Befestigung wenigstens eines Werkzeuges (19) in einem Werkzeugfutter (18) mit Mitteln (26) zur Einführung des Werkzeuges (19) in das Werkzeugfutter (18), **gekennzeichnet durch** eine Einrichtung (14, 15, 16, 10, 11, 12, 38) zur Bestimmung der Ist-Position des Werkzeuges (19) vor und/oder während der Einführung des Werkzeuges (19) in das Werkzeugfutter (18) und Mitteln (26) zur Positionierung des Werkzeuges (19) im Werkzeugfutter (18) unter Verwendung der erhaltenen Information bezüglich der Ist-Position des Werkzeuges (19) zur Einstellung einer Soll-Position des Werkzeuges (19) innerhalb des Werkzeugfutters (18).

9. Vorrichtung nach Anspruch 8, **gekennzeichnet durch** Mittel (28) zur Erwärmung des Werkzeugfutters (18) zur Aufnahme des Werkzeuges (19).

10. Vorrichtung nach Anspruch 8 oder 9, **gekennzeichnet durch** Mittel (10, 11, 12, 38) zur berührungslosen Ermittlung bzw. Überprüfung der Ist-Position und/oder der Soll-Position und/oder eines Referenzpunktes (18b) auf dem Werkzeugfutter (18), bezüglich dessen die Soll-Position des Werkzeuges (19) definierbar ist.

11. Vorrichtung nach einem der Ansprüche 8 bis 10, **gekennzeichnet durch** Mittel (17, 26) zur Drehung des Werkzeugfutters (18) und/oder des Werkzeuges (19) um eine gemeinsame Drehachse.

## Claims

1. Method of fixing a tool (19), in particular a shank-type tool (19), in a clamping chuck (18), in which the tool (19) is inserted into the clamping chuck (18) and fixed in the clamping chuck (18), **characterized in that** the actual position of the tool (19), in particular in the direction of the longitudinal axis of the tool (19) or in the insertion direction, is determined before and/or during the insertion of the tool (19) into the clamping chuck (18), and the insertion of the tool (19) into the clamping chuck (18) is carried out on the basis of the actual position determined until a desired position is reached.

2. Method according to Claim 1, **characterized in that** the clamping chuck (18) is heated for receiving the tool (19) and is cooled for fixing the tool (19) after the desired position of the tool (19) is reached.

3. Method according to Claim 1 or 2, **characterized in that** the actual position of a tool cutting edge (19a), in particular a tool tip, of the tool (19) is determined.

4. Method according to one of the preceding claims, **characterized in that** the desired position is defined with regard to a reference point (18b) on the clamping chuck (18).

5. Method according to at least one of the preceding claims, **characterized in that** the actual position and/or the desired position and/or the reference point (18b) is determined and/or checked in a non-contact manner, in particular by means of a measuring arrangement (14, 15, 16, 10, 11, 12, 38) having an optical system (12).

6. Method according to one of the preceding claims, **characterized in that** the tool (19) and/or the clamping chuck (18) are rotated about a rotation axis (30), in particular a common rotation axis (30), during the insertion of the tool (19) into the clamping chuck (18).

7. Method according to at least Claim 2, **characterized by** subsequent unshrinking of the tool (19) from the clamping chuck (18).

8. Apparatus for fixing at least one tool (19) in a clamping chuck (18), having means (26) for inserting the tool (19) into the clamping chuck (18), **characterized by** an arrangement (14, 15, 16, 10, 11, 12, 38) for determining the actual position of the tool (19) before and/or during the insertion of the tool (19) into the clamping chuck (18), and means (26) for positioning the tool (19) in the clamping chuck (18) using the information obtained with regard to the actual position of the tool (19) for setting a desired position of the tool (19) inside the clamping chuck (18).

9. Apparatus according to Claim 8, **characterized by** means (28) for heating the clamping chuck (18) for receiving the tool (19).

10. Apparatus according to Claim 8 or 9, **characterized by** means (10, 11, 12, 38) for the non-contact determination or checking of the actual position and/or of the desired position and/or of a reference point (18b) on the clamping chuck (18), with regard to which the desired position of the tool (19) can be defined.

11. Apparatus according to one of Claims 8 to 10, **characterized by** means (17, 26) for rotating the clamping chuck (18) and/or the tool (19) about a common rotation axis.

## Revendications

1. Procédé pour fixer un outil (19), notamment un outil à queue (19) dans un mandrin porte-outil (18), avec lequel l'outil (19) est introduit dans le mandrin porte-outil (18) et fixé dans le mandrin porte-outil (18), **caractérisé en ce qu'**avant et/ou pendant l'introduction de l'outil (19) dans le mandrin porte-outil (18), la position réelle de l'outil (19), notamment dans le sens de l'axe longitudinal de l'outil (19) ou dans le sens de l'introduction est déterminée et l'introduction de l'outil (19) dans le mandrin porte-outil (18) est effectuée jusqu'à atteindre une position de consigne en se basant sur la position réelle déterminée.

2. Procédé selon la revendication 1, **caractérisé en ce que** le mandrin porte-outil (18) est chauffé pour recevoir l'outil (19) et, pour fixer l'outil (19), le mandrin porte-outil (18) est refroidi après que l'outil (19) ait atteint sa position de consigne.

3. Procédé selon la revendication 1 ou 2, **caractérisé en ce que** la position réelle d'une arête de coupe d'outil (19a), notamment d'une pointe de l'outil (19) est déterminée.

4. Procédé selon l'une des revendications précédentes, **caractérisé en ce que** la position de consigne est définie par rapport à un point de référence (18b) sur le mandrin porte-outil (18).

5. Procédé selon l'une des revendications précédentes, **caractérisé en ce que** la position réelle et/ou la position de consigne et/ou le point de référence (18b) sont déterminés et/ou contrôlés sans contact, notamment au moyen d'un dispositif de mesure (14, 15, 16, 10, 11, 12, 38) qui présente une optique (12).

6. Procédé selon l'une des revendications précédentes, **caractérisé en ce que** l'outil (19) et/ou le mandrin porte-outil (18) sont tournés pendant l'introduction de l'outil (19) dans le mandrin porte-outil (18) autour notamment d'un axe de rotation (30) commun.

7. Procédé selon au moins la revendication 2, **caractérisé par** un retrait ultérieur de l'outil (19) hors du mandrin porte-outil (18).

8. Dispositif pour fixer au moins un outil (19) dans un mandrin porte-outil (18) comprenant des moyens (26) pour introduire l'outil (19) dans le mandrin porte-outil (18), **caractérisé par** un dispositif (14, 15, 16, 10, 11, 12, 38) pour déterminer la position réelle de l'outil (19) avant et/ou pendant l'introduction de l'outil (19) dans le mandrin porte-outil (18) et des moyens (26) pour positionner l'outil (19) dans le mandrin porte-outil (18) en utilisant l'information obtenue concernant la position réelle de l'outil (19) en vue de régler une position de consigne de l'outil (19) à l'intérieur du mandrin porte-outil (18).

9. Dispositif selon la revendication 8, **caractérisé par** des moyens (28) pour chauffer le mandrin porte-outil (18) afin de recevoir l'outil (19).

10. Dispositif selon la revendication 8 ou 9, **caractérisé par** des moyens (10, 11, 12, 38) pour la détermination ou le contrôle sans contact de la position réelle et/ou de la position de consigne et/ou d'un point de référence (18b) sur le mandrin porte-outil (18) par rapport auquel peut être définie la position de consigne de l'outil (19).

11. Dispositif selon l'une des revendications 8 à 10, **caractérisé par** des moyens (17, 26) pour faire tourner le mandrin porte-outil (18) et/ou l'outil (19) autour d'un axe de rotation commun.
